# EUROPEAN PATENT APPLICATION

(11) **EP 4 779 614 A1**
(43) Date of publication of application: **22.07.2026**
(21) Application number: 26150428.6
(22) Date of filing: 06.01.2026
(51) Int. Cl.: G09B 23/28, G09B 23/30

(54) **MODEL EYE FOR CALIBRATING APPARATUS FOR EXAMINING DRY EYE SYNDROME**

(30) Priority: 20.01.2025 KR 20250007896
(71) Applicant: Huvitz Co., Ltd., Anyang-si, Gyeonggi-do 14055 (KR)
(72) Inventor: JO, Sun Hyung, 14055 Anyang-si (KR); JU, Ye Na, 14055 Anyang-si (KR)
(74) Representative: Henkel & Partner mbB

(57) **Abstract**

A model eye used for calibrating an apparatus for examining dry eye syndrome by having a coating layer that simulates the oil layer of a human eye is disclosed. The model eye (50) comprises: a model eye body (200) corresponding to a cornea of a human eye and made of a material from which measurement light can be reflected from a front surface thereof; and a reflective coating layer (400) corresponding to an oil layer coated on the cornea of the human eye, coated on the front surface of the model eye body (200), and reflecting measurement light from a front surface and a rear surface thereof to generate reflected light of a predetermined wavelength.

## Description

### CROSS-REFERENCE TO RELATED APPLICATION

This application claims benefit of priority to Korean Patent Application No. 10-2025-0007896 filed on January 20, 2025, the entire contents of which are incorporated herein by reference.

### FIELD OF THE INVENTION

The present invention relates to a model eye, and more particularly, to a model eye used for calibrating an apparatus for examining dry eye syndrome by having a coating layer that simulates the oil layer of a human eye.

### BACKGROUND

Dry eye syndrome is an ophthalmic disease in which the tear layer covering the cornea is insufficient, damaging the corneal surface and causing symptoms such as irritation, foreign body sensation, and dryness.

The tear layer covering the cornea consists of a mucous layer, a watery layer, and an oil layer covering the watery layer. The oil layer is composed of oil produced by the meibomian glands and is also referred to as a lipid layer. If the thickness of the oil layer is too thin, the watery layer evaporates, making dry eye syndrome more likely to occur. Therefore, an apparatus for examining dry eye syndrome is used to measure the thickness of the oil layer covering the cornea to diagnose dry eye syndrome.

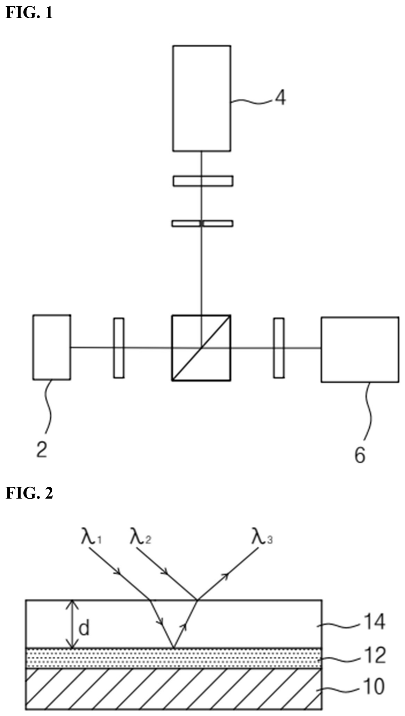

FIG. 1 is a diagram for explaining a conventional apparatus for examining dry eye syndrome. As shown in FIG. 1, the conventional apparatus for examining dry eye syndrome includes a light source 4 that irradiates measurement light onto a subject's eye 2, and a camera 6 that detects the color of reflected light formed by the reflection of the measurement light from the oil layer of the subject's eye 2.

FIG. 2 is a diagram for explaining the principle of measuring the thickness of the oil layer in a conventional apparatus for examining dry eye syndrome. As shown in FIG. 2, a watery layer 12 and an oil layer 14 are sequentially formed on the surface of the cornea 10. When measurement light having various wavelengths (λ1, λ2), for example, white light, is irradiated onto the oil layer 14, reflected light from the front surface of the oil layer 14 and reflected light from the rear surface of the oil layer 14 overlap, generating reflected light of a specific wavelength (λ3). The wavelength (λ3) of the reflected light, i.e., the color, varies depending on the refractive index (n) and thickness (d) of the oil layer 14. Since the refractive index (n) of the oil layer 14 is fixed, the thickness (d) of the oil layer 14 can be determined from the color of the reflected light.

In a conventional apparatus for examining dry eye syndrome, physical characteristics such as the wavelength of the measurement light irradiated from the light source 4 and the camera 6 that detects the color of the reflected light vary slightly from one apparatus for examining dry eye syndrome to another. Therefore, even when examining a subject's eye 2 having the same thickness of the oil layer 14, the color of the reflected light obtained by the camera 6 may differ slightly from one apparatus for examining dry eye syndrome to another.

Therefore, it is necessary to use a standard sample having a predetermined thickness of the oil layer 14, i.e., a model eye, to obtain the output value of the apparatus for examining dry eye syndrome, specifically the camera 6, to check whether the output value of the apparatus is appropriate, and to calibrate the output value of the apparatus as needed.

### [Prior Art Document]

(Patent Document 1) Korean Patent No. 10-2728315 (Nov. 5, 2024)

### SUMMARY OF THE INVENTION

### TECHNICAL OBJECTS

An object of the present invention is to provide a model eye having a coating layer that simulates the oil layer of a human eye.

Another object of the present invention is to provide a model eye that can be used for calibrating an apparatus for examining dry eye syndrome.

### TECHNICAL SOLUTION

To achieve the above objects, the present invention provides a model eye comprising: a model eye body corresponding to a cornea of a human eye and made of a material from which measurement light can be reflected from a front surface thereof; and a reflective coating layer corresponding to an oil layer coated on the cornea of the human eye, coated on the front surface of the model eye body, and reflecting measurement light from a front surface and a rear surface thereof to generate reflected light of a predetermined wavelength.

Preferably, the model eye body has a structure of a cylinder with a convex front surface and a flat rear surface, and is made of glass.

Preferably, the reflective coating layer is made of silicon dioxide (SiO₂) or magnesium fluoride (MgF₂).

Preferably, when white measurement light is irradiated onto the reflective coating layer, reflected light of different colors is generated from the reflective coating layer depending on the refractive index and thickness of the reflective coating layer.

Preferably, a thickness of the reflective coating layer is determined according to a refractive index of a material forming the reflective coating layer.

Preferably, the model eye further comprises a rear coating layer formed on the rear surface of the model eye body, wherein the rear coating layer is formed in black.

Preferably, the model eye is used for calibrating the output value of an apparatus for examining dry eye syndrome.

### EFFECTS OF THE DISCLOSURE

The model eye according to the present invention can be used for calibrating an apparatus for examining dry eye syndrome by having a coating layer that simulates the oil layer of a human eye.

### BRIEF DESCRIPTION OF THE DRAWINGS

FIG. 1 is a diagram for explaining a conventional apparatus for examining dry eye syndrome.
FIG. 2 is a diagram for explaining the principle of measuring the thickness of the oil layer in a conventional apparatus for examining dry eye syndrome.
FIG. 3 is a side cross-sectional view (A) and a plan view (B) for explaining the structure of a model eye according to an embodiment of the present invention.

### DETAILED DESCRIPTION OF THE PREFERRED EMBODIMENTS

Hereinafter, the present invention will be described in detail with reference to the accompanying drawings. In the following description, expressions such as up, down, left, right, front, rear, etc., are used to indicate the relative positional relationships of the components.

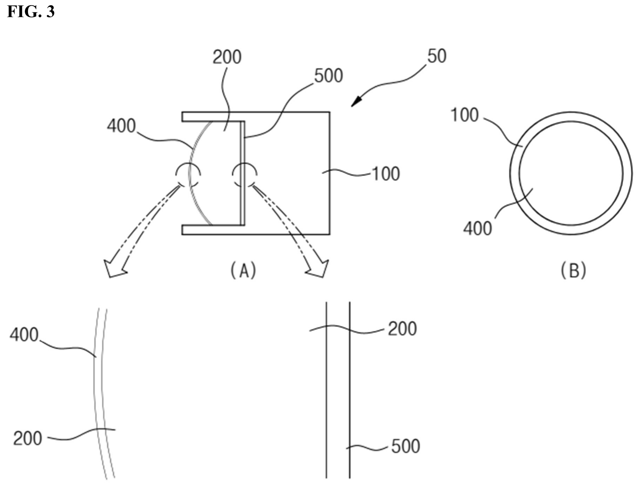

FIG. 3 is a side cross-sectional view (A) and a plan view (B) for explaining the structure of a model eye according to an embodiment of the present invention. As shown in FIG. 3, the model eye 50 according to the present invention includes a model eye body 200 and a reflective coating layer 400 coated on the front surface of the model eye body 200.

The model eye body 200 is a portion corresponding to the cornea of a human eye, i.e., a portion that simulates the cornea. The model eye body 200 may be made of a material from which measurement light can be reflected from its front surface, and for example, may be made of glass. The model eye body 200 may have a convex front surface and a flat rear surface. Preferably, the model eye body 200 may have a structure of a cylinder with a convex front surface and a flat rear surface, and for example, may have a diameter of 10 to 11 mm, specifically 10.5 mm, a thickness of the most protruding portion when viewed from the side (length) of 3 to 7 mm, specifically 5 mm, and a curvature of the front surface of R7 to R9, specifically R8 (i.e., the curvature of a circle with a radius of 8 mm).

The reflective coating layer 400 is a portion corresponding to the oil layer coated on the cornea of a human eye, i.e., a portion that simulates the oil layer, coated on the front surface of the model eye body 200, and reflects measurement light from the front surface and rear surface thereof to generate reflected light of a predetermined wavelength.

The reflective coating layer 400 may be made of a material from which measurement light can be reflected from its front surface and rear surface, and for example, may be made of materials such as silicon dioxide (SiO₂) or magnesium fluoride (MgF₂). In general, the refractive index of the oil layer formed in the human eye is known to be about 1.46 to 1.53, for example, about 1.482. Therefore, it is preferable that the material forming the reflective coating layer 400 also has a refractive index similar to that of the oil layer formed in the human eye. For example, the reflective coating layer 400 may be formed using silicon dioxide (SiO₂) having a refractive index of 1.46.

The thickness of the reflective coating layer 400 is determined according to the thickness of the oil layer being simulated. The thickness of the reflective coating layer 400 may also be determined according to the refractive index of the material forming the reflective coating layer 400. For example, if the refractive index of the reflective coating layer 400 is the same as that of the oil layer, the thickness of the reflective coating layer 400 is formed to be the same as the thickness of the oil layer being simulated. In this case, when the oil layer of the human eye and the reflective coating layer 400 of the model eye 50 are examined using an apparatus for examining dry eye syndrome, reflected lights of the same color are obtained (since the refractive indices and thicknesses of the two reflective layers are the same). On the other hand, if the refractive index of the reflective coating layer 400 is not the same as that of the oil layer, the thickness of the reflective coating layer 400 can be adjusted so that the colors of the reflected lights obtained from the oil layer of the human eye and the reflective coating layer 400 of the model eye 50 are the same.

Therefore, a reference model eye 50 that mimics the state of a reference or standard human eye is manufactured, and when the reflected light wavelength of the reference model eye 50 is obtained using an apparatus for examining dry eye syndrome that has different output values, i.e., different reflected light wavelengths, due to component variations, etc., the obtained reflected light wavelength becomes the reference output value corresponding to the oil layer thickness of the reference human eye in the corresponding apparatus. That is, the output value of the apparatus for examining dry eye syndrome can be calibrated using the reference model eye 50. In this manner, a plurality of model eyes corresponding to cases where the oil layer thickness is thin, normal, or thick can be manufactured separately, and the output values of the apparatus for examining dry eye syndrome can be calibrated using the plurality of model eyes.

For example, the reflective coating layer 400 is formed of silicon dioxide (SiO₂) having a refractive index of 1.46, and the thickness of the reflective coating layer 400 is adjusted to produce three model eyes 50 such that the color of the reflected light reflected from the reflective coating layer 400 is red (R), green (G), or blue (B). For example, when the reflective coating layer 400 made of silicon dioxide (SiO₂) having a refractive index of 1.46 is formed, if the thickness of the reflective coating layer 400 is 240 µm, the color of reflected light is red (R); if the thickness is 200 µm, the color of reflected light is green (G); and if the thickness is 170 µm, the color of reflected light is blue (B). That is, when white measurement light is irradiated onto the reflective coating layer 400, reflected light of different colors is generated from the reflective coating layer 400 depending on the refractive index and thickness of the reflective coating layer 400. The output value of the apparatus for examining dry eye syndrome can be calibrated using one or more model eyes 50 manufactured in this manner.

As described above, the measurement light of a conventional apparatus for examining dry eye syndrome is white light including lights of various wavelengths, and the output value of the apparatus, i.e., the color of the reflected light detected by the camera 6, varies depending on the thickness of the reflective coating layer 400. Therefore, using a newly manufactured or to-be-calibrated apparatus for examining dry eye syndrome, a model eye 50 having a reflective coating layer 400 corresponding to a predetermined oil layer thickness is examined to obtain the output value of the model eye 50, i.e., the wavelength (color) of the reflected light reflected from the reflective coating layer 400. The output value obtained in this manner becomes the value corresponding to the predetermined oil layer thickness in the corresponding apparatus.

As shown in FIG. 3, the model eye 50 according to the present invention may further include a rear coating layer 500 formed on the rear surface of the model eye body 200, a frame 100 in which the model eye body 200 is accommodated, and the like.

The rear coating layer 500 is provided to suppress reflection of measurement light from the rear surface of the model eye body 200, and is formed in a dark color, preferably black, to suppress reflection of measurement light as much as possible.

The frame 100 is provided to facilitate handling, mounting, storage, and damage prevention of the model eye 50, and may be made of various shapes and materials in which the model eye body 200 is accommodated. For example, the frame 100 may have a cylindrical shape in which the model eye body 200 is accommodated and may be made of synthetic resin.

While the present invention has been described with reference to the accompanying drawings and exemplary embodiments, the present invention is not limited to the contents shown in the drawings or the above-described embodiments. Reference numerals are indicated in the following claims to aid understanding, but the scope of the following claims is not limited to the reference numerals or the contents shown in the drawings, and should be interpreted to cover all modifications, equivalent configurations, and functions of the exemplary embodiments.

## Claims

1. A model eye (50) comprising:
a model eye body (200) corresponding to a cornea of a human eye and made of a material from which measurement light can be reflected from a front surface thereof; and
a reflective coating layer (400) corresponding to an oil layer coated on the cornea of the human eye, coated on the front surface of the model eye body (200), and reflecting measurement light from a front surface and a rear surface thereof to generate reflected light of a predetermined wavelength.

2. The model eye (50) according to claim 1, wherein the model eye body (200) has a structure of a cylinder with a convex front surface and a flat rear surface, and is made of glass.

3. The model eye (50) according to claim 1, wherein the reflective coating layer (400) is made of silicon dioxide (SiO₂) or magnesium fluoride (MgF₂).

4. The model eye (50) according to claim 1, wherein when white measurement light is irradiated onto the reflective coating layer (400), reflected light of different colors is generated from the reflective coating layer (400) depending on the refractive index and thickness of the reflective coating layer (400).

5. The model eye (50) according to claim 1, wherein a thickness of the reflective coating layer (400) is determined according to a refractive index of a material forming the reflective coating layer (400).

6. The model eye (50) according to claim 1, further comprising a rear coating layer (500) formed on a rear surface of the model eye body (200), wherein the rear coating layer (500) is formed in black.

7. The model eye (50) according to claim 1, which is used for calibrating an output value of an apparatus for examining dry eye syndrome.
